# EUROPÄISCHE PATENTSCHRIFT

(11) **EP 2 233 052 B1**
(45) Veröffentlichungstag und Bekanntmachung des Hinweises auf die Patenterteilung: **06.11.2013**
(21) Anmeldenummer: 10157303.8
(22) Anmeldetag: 23.03.2010
(51) Int. Cl.: A47K 13/12, E05D 11/10, A47K 13/24, B60R 15/04

(54) **Arretierbare WC-Scharniervorrichtung**
Adjustable WC hinge device
Dispositif de charnières de WC pouvant être bloqué

(30) Priorität: 23.03.2009 DE 202009003907 U
(43) Veröffentlichungstag der Anmeldung: 29.09.2010
(73) Patentinhaber: Evac GmbH, 22880 Wedel (DE)
(72) Erfinder: Autzen, Matthias, 22880, Wedel (DE)
(74) Vertreter: Eisenführ, Speiser & Partner

(56) Entgegenhaltungen:
- DE-B3-102007 028 678

## Beschreibung

Die Erfindung betrifft eine Scharniervorrichtung für einen Deckel und/oder Sitz einer Toilette in einem bewegten Fahrzeug, mit zumindest einem an einem Befestigungsflansch drehbar gelagerten Halteelement zur Befestigung des Deckels oder des Sitzes, das einstückig mit einer als Vertiefung ausgebildeten Rastnut verbunden ist die zur Arretierung des Deckels in einer angehobenen Position mit einem federnd nachgebenden Arretierungselement zusammenwirkt.

Scharniervorrichtungen dieser Bauart zeichnen sich zum Zwecke der Eignung in bewegten Fahrzeugen, wie insbesondere Waggons für den gleisgebundenen Bahnverkehr, aber auch Reisebussen oder anderen Fahrzeugen, die Quer- oder Längsbeschleunigungen unterliegen, dadurch aus, dass der durch das Scharnier drehbar gelagerte Toilettendeckel und/oder der durch das Scharnier drehbar gelagerte Toilettensitz zumindest in der hochgeklappten Stellung, manchmal auch in der heruntergeklappten Stellung durch eine im Scharnier ausgebildete Arretierungsvorrichtung gegen ungewolltes Herunterklappen oder Heraufklappen gesichert ist.

Scharniere, welche diese Funktionalität aufweisen, sind grundsätzlich vorbekannt. So ist beispielsweise eine weit verbreitete Bauweise solcher Scharniere derart ausgeführt, dass der Deckel bzw. Sitz an zwei drehbar gelagerten Halteelementen befestigt ist, welche jeweils eine Arretierungsnut aufweisen. Diese Arretierungsnut wirkt mit einer parallel zur Lagerungsachse des Halteelements angeordneten Arretierungsstange zusammen. Diese Arretierungsstange weist zwei radiale Bohrungen auf, mittels derer sich radial erstreckende Federelemente in beiden Endbereichen der Arretierungsstange angeordnet und zentriert sind. Mittels dieser Federelemente ist die Arretierungsstange in radialer Richtung federnd nachgiebig, so dass die Arretierungsnuten in den Halteelementen in einer bestimmten Schwenklage der Halteelemente um deren Drehachse an der Arretierungsstange einrasten und dann den Deckel bzw. Sitz in dieser arretierten Lage halten können.

Das Dokument DE 10 2007 028678 weist eine Scharniervorrichtung mit den Merkmalen des Oberbegriffes des Anspruchs 1 auf.

Eine besondere Anforderung an Scharniervorrichtungen der eingangs genannten Art ist eine robuste Bauweise, die den im Betrieb auftretenden dynamischen Belastungen und vorzugsweise darüber hinaus auch durch Vandalismus einwirkenden Kräften widerstehen kann. Aus diesem Grund ist die zuvor erläuterte Scharniervorrichtung nach dem Stand der Technik derart ausgeführt, dass die Halteelemente um eine beidseits mit jeweils einem Befestigungsflansch verbundene massive Achse drehbar gelagert sind, und weiterhin die Arretierungsstange in Bezug auf diese Befestigungsflansche verschieblich geführt ist. Zwar ergibt sich durch diese Bauweise eine in hohem Maße belastbare Konstruktion, jedoch ist die Montage der Scharniervorrichtung aufgrund der einerseits bestehenden Notwendigkeit der beidseitigen Befestigung der massiven Achse für die Halteelemente und der andererseits erforderlichen Führung der Federelemente für das elastische Nachgeben der Arretierungsstange und der zugleich ausgeführten Führung der Arretierungsstange äußerst aufwendig und kann in effizienter Weise nur mit entweder speziell angefertigten Montagehilfsmitteln oder durch zwei Personen ausgeführt werden. Aufgrund des Einsatzes solcher Scharniervorrichtungen in öffentlichen oder quasi-öffentlichen Bereichen kann die Montage insbesondere nicht durch Verwendung frei zugänglicher Schrauben oder dergleichen vereinfacht werden, da es grundsätzlich gewünscht ist, dass die Scharniervorrichtung nicht oder nur mit Spezialwerkzeug demontiert werden kann.

Der Erfindung liegt die Aufgabe zugrunde, eine Scharniervorrichtung mit Arretierungsfunktion bereitzustellen, die in einer gegenüber dem Stand der Technik vereinfachten Weise montiert werden kann, ohne hierbei die Eigenschaften hinsichtlich des Widerstands gegen mutwillige Beschädigungen oder Demontageversuche aufzugeben.

Diese Aufgabe wird erfindungsgemäß gelöst, indem das Arretierungselement als um ihre Längsachse drehbare und radial zur Drehachse der Halteelemente federnd nachgebende Arretierungsstange ausgebildet ist und derart angeordnet ist, dass sie sich bei der Ein- und Ausrastung der Rastnut an der Stange zur Vermeidung einer Relativbewegung zwischen den Oberflächen des in Kontakt tretenden Arretierungselements und des Halteelements drehen kann.

Erfindungsgemäß wird somit auf eine direkte Führung von federnd nachgebenden Elementen an radialen Bohrungen der Arretierungsstange verzichtet und die Arretierungsstange statt dessen drehbar gelagert. Dies bewirkt gleich eine Reihe von Vorteilen. Ein erster, wesentlicher Vorteil liegt darin, dass bei der erfindungsgemäßen Scharniervorrichtung die elastische Nachgiebigkeit des Arretierungselements durch entweder ein federndes Nachgeben der Arretierungsstange selbst oder - vorzugsweise - durch an den für die Drehbewegung vorgesehenen Lagerungszapfen der Arretierungsstange abgestützte Federelemente bereitgestellt werden kann. Durch diese konstruktiv unterschiedliche Ausgestaltung wird eine vereinfachte Montage der Scharniervorrichtung ermöglicht, da die durch die Führung der Federelemente gemäß des Standes der Technik unvermeidbare Doppelpassung zu der Befestigung der Lagerungsstange der Halteelemente und der Führung der Arretierungsstange entfällt. Ein weiterer Vorteil besteht darin, dass durch die Drehbarkeit der Arretierungsstange eine Reibbewegung zwischen den in Kontakt tretenden Flächen der Halteelemente und der Arretierungsstange vermieden werden kann. Hierdurch wird verhindert, dass die Struktur der Scharniervorrichtung durch Verschleiß im Laufe ihrer Einsatzzeit geschwächt wird und dadurch in ihrer Funktion beeinträchtigt wird oder anfällig wird für Vandalismus.

Je nachdem, ob eine Arretierung lediglich in der aufgeklappten Stellung oder auch in der geschlossenen Stellung des Deckels bzw. Sitzes wünschenswert ist, können an dem oder den Halteelement(en) eine oder zwei Arretierungsnuten ausgebildet sein. Die Arretierungsnuten sind dabei vorzugsweise mit solcherart verrundeten Kanten ausgeführt, dass der Arretierungsvorgang durch einen kontinuierlich ansteigenden Kraftaufwand und einen zur Arretierungsstellung hin kontinuierlich abfallenden Kraftaufwand mit einem lokalen Minimum in der Arretierungsstellung erzielt wird.

Gemäß einer ersten bevorzugten Ausführungsform sind für den Deckel zwei Halteelemente und/oder für den Sitz zwei Haltelemente bereitgestellt, die vorzugsweise um eine gemeinsame Achse drehbar gelagert sind und die weiter vorzugsweise mit einer einzigen Arretierungsstange zur Arretierung jedes Halteelementes zusammenwirken. Grundsätzlich ist zu verstehen, dass die erfindungsgemäße Scharniervorrichtung mit einem einzigen Halteelement ausgebildet sein könnte, welches entsprechend stark dimensioniert ist, um einen Deckel oder Sitz daran zu befestigen und drehbar bzw. arretierbar zu lagern. Insbesondere ist jedoch vorgesehen, dass mittels der erfindungsgemäßen Scharniervorrichtung sowohl ein Deckel als auch ein Sitz drehbar und jeweils arretierbar gelagert werden können, wobei dies durch entweder jeweils ein entsprechend dimensioniertes Halteelement erfolgen kann oder durch zwei oder mehrere entsprechend dimensionierte Halteelemente für jeweils den Deckel und jeweils den Sitz.

Gemäß einer noch weiteren bevorzugten Ausführungsform ist vorgesehen, dass das/die Halteelemente um eine Achse drehbar gelagert ist/sind, die sich in Einbaulage horizontal erstreckt und die mittels eines Verbindungsstücks mit einer Flanschplatte zur Befestigung des Scharniers verbunden ist.

Das Verbindungsstück kann hierbei vorzugsweise senkrecht zu der Achse angeordnet sein, um welche die Halteelemente drehbar gelagert sind. Insbesondere kann die Achse mit dem Verbindungsstück verschraubt sein.

Noch weiter ist es bevorzugt, wenn das Verbindungsstücks und die Flanschplatte an einem einstückigen Gussteil ausgebildet sind.

Diese spezifische Ausgestaltung der Fertigung des Verbindungsstücks und der Flanschplatte als ein gemeinsames, einstückiges Gussteil eröffnet sich durch die spezifisch vereinfachten Montagevorgänge, die mit der erfindungsgemäßen Scharniervorrichtung möglich sind. Denn während es bei der vorbekannten, eingangs erläuterten Scharniervorrichtung nach dem Stand der Technik zur Vereinfachung der Serienmontage vorteilhaft ist, zunächst die zur Lagerung der Halteelemente dienende Achse und die hierzu parallel verlaufende Arretierungsstange an den hierzu senkrecht verlaufenden Verbindungsstücken zu befestigen und erst nachfolgend die Flanschplatten mit daran angesetzter und geführter Feder zur federnden Abstützung der Arretierungsstange an die Verbindungsstücke zu befestigen, beispielsweise anzuschweißen, kann bei der erfindungsgemäßen Scharniervorrichtung eine einfache Montage auch dann erfolgen, wenn Verbindungsstück und Scharnierplatte bereits fest miteinander verbunden sind, sei es durch einen Schweißvorgang oder durch die Ausführung als einstückiges Gussteil.

Noch weiter ist es bevorzugt, wenn zwei Befestigungsflansche bereitgestellt sind, die jeweils ein Verbindungsstück umfassen, wobei die Verbindungsstücke mittels einer in Einbaulage vorzugsweise oberen Rundstange miteinander verbunden sind, an der das/die Halteelemente drehbar gelagert sind und an den Verbindungsstücken eine in Einbaulage vorzugsweise untere Arretierungsstange drehbar und translatorisch entlang den Verbindungsstücken verschiebbar gelagert ist. Diese Ausgestaltung ermöglicht einerseits einen robusten Aufbau der erfindungsgemäßen Scharniervorrichtung und vereinfacht weiterhin die Montage.

Dabei ist es besonders bevorzugt, wenn die Rundstange und die Arretierungsstange parallel zueinander angeordnet sind. Durch diese Parallelanordnung wird eine Arretierungsfunktion auch bei gleichzeitiger Anordnung von mehreren Halteelementen an der Rundstange durch ein und dieselbe Arretierungsstange ermöglicht.

Gemäß einer weiteren Fortbildung weist die Rundstange an beiden Enden ein Gewinde auf, vorzugsweise ein Außengewinde, mittels dem sie mit einem entsprechenden Gewinde an den Verbindungsstücken verbunden ist, wobei das Gewinde an der einen Seite der Rundstange als linksgängig und das Gewinde an der anderen Seite der Rundstange rechtsgängig ausgebildet ist. Diese Ausgestaltung ermöglicht ein gleichzeitiges Einschrauben der Rundstange in die beiden außenliegenden Verbindungsstücke und somit eine für eine mutwillige Zerstörung oder Demontage widerstandsfähige Gesamtkonstruktion.

Noch weiter ist es bei der Ausgestaltung der Scharniervorrichtung mit Verbindungsstück und Flanschplatte bevorzugt, wenn um das Verbindungsstück ein in axialer Richtung elastisches Ringelement angeordnet ist, welches sich zwischen Flanschplatte und Arretierungsstange erstreckt und dazu dient, die elastische Beweglichkeit der Arretierungsstange bereitzustellen. Durch diese Art und Weise der Anordnung eines elastischen Ringelements wird eine unverlierbare Anordnung des die Federung bereitstellenden Elements sichergestellt und zugleich eine sichere und montagefreundliche Führung dieses Federelements erzielt.

Dabei kann insbesondere vorgesehen sein, dass das elastische Ringelement ein Schlauchstück aus einem gummielastischen Kunststoff oder eine Schraubenfeder ist und dass vorzugsweise das/die Haltelement(e), das Arretierungselement und/oder der/die Befestigungsflansch(e) aus einem korrosionsbeständigen Material, vorzusgweise aus einem Edelstahl sind. Als gummielastisches Material kann hier beispielsweise ein Kunststoff auf Silikonbasis eingesetzt werden.

Schließlich ist es weiterhin bevorzugt, wenn die drehbare Lagerung der Haltelemente, die drehbare Lagerung der Arretierungsstange und die translatorische Bewegung der Arretierungsstange mittels Kunststoffbuchsen gelagert ist.

Durch diese und die vorhergehende Ausgestaltung wird eine insgesamt korrosionsbeständige Ausführung der erfindungsgemäßen Scharniervorrichtung erzielt, die auch dem Einsatz von aggressiven Reinigungsmitteln standhält und gleichwohl einen schmierungsfrei funktionierenden Betrieb bei weitestgehender Verschleißfreiheit gewährleistet.

Eine bevorzugte Ausführungsform der Erfindung wird anhand der beiliegenden Figuren erläutert. Es zeigen:
Figur 1 eine perspektivische Ansicht einer Scharniervorrichtung nach dem Stand der Technik,
Figur 2 eine teilgeschnittene Frontalansicht einer Ausführungsform der erfindungsgemäßen Scharniervorrichtung,
Figur 3 eine Draufsicht auf die Scharniervorrichtung der Figur 2,
Figur 4 eine Seitenansicht auf die Scharniervorrichtung der Figur 2,
Figur 5 eine perspektivische Ansicht der Scharniervorrichtung der Figur 2.

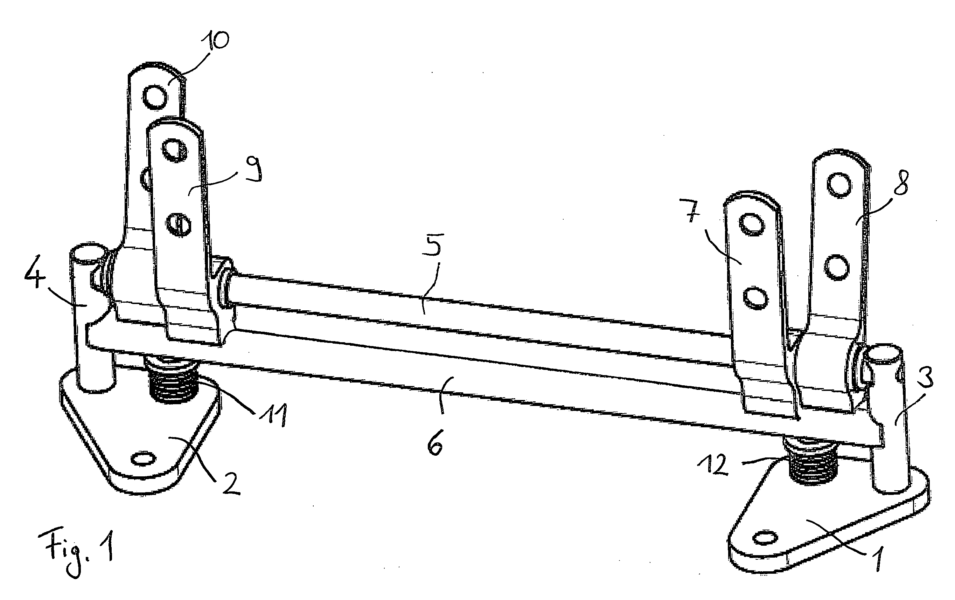

Wie man zunächst Figur 1 entnehmen kann, weist eine Scharniervorrichtung nach dem Stand der Technik zwei außenliegende Flanschplatten 1,2 auf, mit denen die Scharniervorrichtung beispielsweise an einer Wand oder einer Toilettenschüssel befestigt werden kann. An den Flanschplatten 1,2 sind jeweils sich vertikal nach oben erstreckende Haltestäbe 3,4 befestigt. An diesen Haltestäben ist einerseits eine obere Rundstange befestigt, die sich horizontal zwischen den beiden Haltestäben erstreckt und andererseits eine untere Arretierungsstange, die sich parallel zur oberen Rundstange erstreckt. An der oberen Rundstange 5 sind insgesamt vier Halteelemente 7-10 drehbar gelagert. Die Halteelemente weisen einerseits ein längeres Ende auf, in dem jeweils zwei Bohrungen zur Befestigung eines Deckels oder Sitzes angeordnet sind und ein kurzes Ende, in dem eine Arrretierungsnut angeordnet ist. Die Arretierungsnut ist solcherart ausgebildet, dass sie mit der Arretierungsstange 6 zusammenwirkt.

Figur 1 zeigt die Halteelemente in der arretierten Position. Wie man erkennen kann, sind weiterhin jeweils jeder Flanschplatte zugeordnete Federelemente 11,12 vorhanden, die sich zwischen Flanschplatte und Arretierungsstange erstrecken und an der Arretierungsstange durch darin angeordnete Radialbohrungen geführt sind. Durch diese Federelemente 11,12 wird eine senkrecht zur Erstreckungsrichtung liegende translatorische federnde Bewegung der Arretierungsstange ermöglicht und hierdurch die Funktionalität der Scharniervorrichtung erzielt.

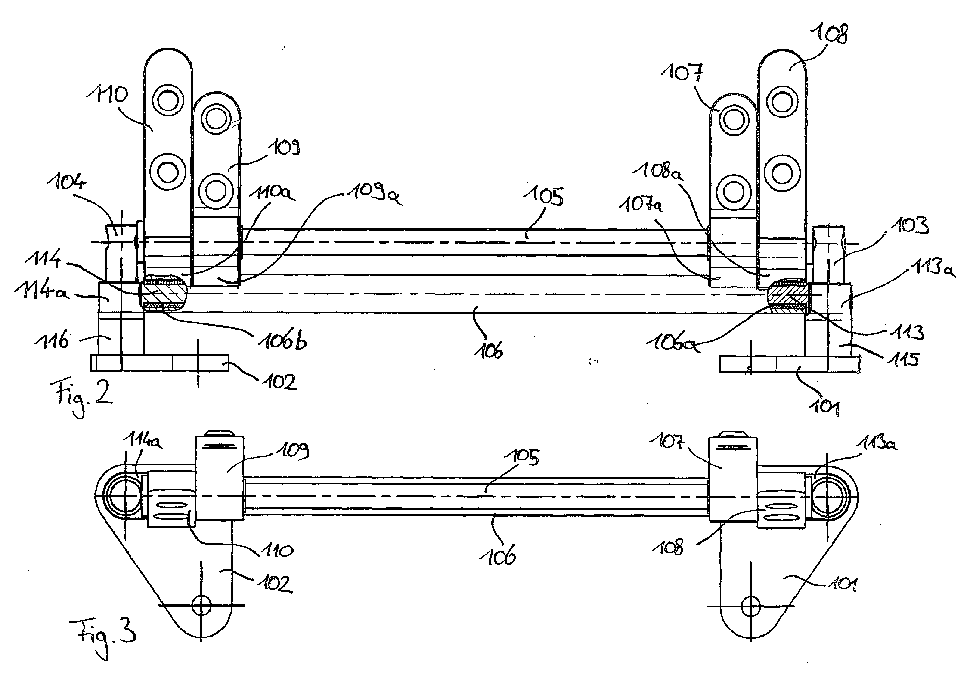

Wie aus Figur 2 zu erkennen ist, weist die erfindungsgemäße Scharniervorrichtung ebenfalls Flanschplatten 101, 102 auf, die seitlich angeordnet sind und dazu dienen, die Scharniervorrichtung an einer Wand oder einer Toilettenschüssel zu befestigen. Jede der Flanschplatten 101, 102 ist als ein einstückiges Gussteil gemeinsam mit einem Verbindungsstück 103, 104 ausgebildet, welches sich senkrecht zur Fläche der Flanschplatte erstreckt.

An dem der Flanschplatte gegenüberliegende Ende der Verbindungsstücke 103, 104 ist eine Rundstange 105 in radialer Richtung zu den Verbindungsstücken in die Verbindungsstücke eingeschraubt. Diese Schraubverbindung wird durch ein linksgängiges Außengewinde an der Rundstange mit einem entsprechend linksgängigen Innengewinde im Verbindungsstück 104 und durch ein rechtsgängiges Außengewinde an der Rundstange in einem entsprechend rechtsgängigen Innengewinde im Verbindungsstück 103 bewirkt. Auf diese Weise kann die Rundstange 105 um ihre Längsachse gedreht werden und hierbei gleichzeitig in die feststehenden Verbindungsstücke 103, 104 eingeschraubt werden.

Parallel zur Rundstange 105 läuft eine Arretierungsstange 106. Die Arretierungsstange 106 ist als kreisrundes Hohlprofil ausgeführt und mittels in seinem Inneren angeordneten Gleitlagern 106a, 106b drehbar an Drehzapfen 113, 114 gelagert. Die Drehzapfen 113, 114 erstrecken sich jeweils radial zu den Verbindungsstücken 103, 104 und sind an diesen Verbindungsstücken 103, 104 translatorisch in deren Längsrichtung mittels entsprechender Lagerringe 113a, 114a geführt. Auf diese Weise kann die Arretierungsstange 106 in Bezug auf die Rundstange 105 entlang den Verbindungsstücken 103, 104 verschoben werden, wodurch sich der Abstand zwischen Rundstange 105 und Arretierungsstange 106 unter im Wesentlichen Beibehaltung von deren paralleler Lage ändert.

An der Rundstange 105 sind insgesamt vier Halteelemente 107-110 drehbar mittels Kunststoffgleitbuchsen gelagert. Jedes der Halteelemente 107-110 weist ein erstes Ende auf, an dem jeweils zwei Bohrungen zur Befestigung eines Deckels oder Sitzes an dem Halteelement ausgebildet sind.

Jedes der Halteelemente 107-110 weist darüber hinaus eine in Bezug auf die Drehachse dem Halteabschnitt mit den zwei Bohrungen gegenüberliegende Rastnut 107a-110a auf, die als kongruent zur Außenkontur der Arretierungsstange 106 ausgebildete Vertiefung ausgeführt ist.

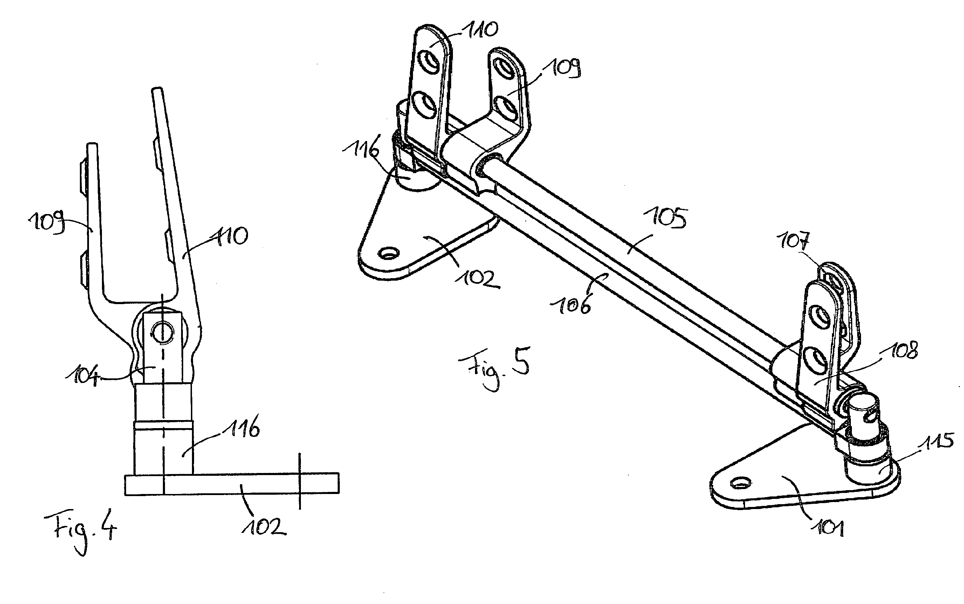

Die Figuren 2-5 zeigen die Scharniervorrichtung mit den Halteelementen in der eingerasteten Position. Wie man erkennen kann, stehen in dieser eingerasteten Position die Halteabschnitte der Halteelemente 107-110 solcherart seitlich versetzt und unter geringfügig unterschiedlichem Winkel zueinander, dass in dieser arretierten Stellung sowohl ein an den Halteelementen 107, 109 befestigter Deckel als auch ein an den Halteelementen 108, 110 befestigter Sitz in der arretierten Position sicher gehalten werden kann.

Zwischen der Ringhülse 113a, 114a, mit der die Arretierungsstange 106 translatorisch verschiebbar an dem Verbindungsstück 103, 104 geführt ist, und der Flanschplatte 101, 102 ist jeweils ein als gummielastischer Ringkörper ausgeführtes Federelement 115, 116 angeordnet. Die Federelemente 115, 116 bewirken eine Druckfederkraft, welche einer Bewegung der Arretierungsstange 106 von der Rundstange 105 weg entgegenwirkt. Auf diese Weise wird die Arretierungsstange in der dargestellten Position der Halteelemente in Richtung auf die Rundstange 105 elastisch vorgespannt und hierdurch in die Arretierungsnuten der Halteelemente 107-110 gepresst, was deren Lage sichert.

Die erfindungsgemäße Scharniervorrichtung kann in besonders einfacher Weise gefertigt werden. Die Fertigungsabfolge sieht hierbei wie folgt aus:
Zunächst werden die Halteelemente 107-110 als einstückige Gussteile vorgefertigt und ebenso die Verbindungsstücke 103, 104 mit jeweils daran angeformter Scharnierplatte 101, 102 als einstückige Gussteile vorgefertigt.

Als erster Montageschritt werden dann die Federelemente 115, 116 auf die jeweiligen Verbindungsstücke 103, 104 aufgefädelt und bis zur Flanschplatte 101, 102 geschoben. Hierauf folgend wird der vormontierte Verbund aus dem Ringkörper 113a,114a mit daran befestigtem Lagerzapfen 113, 114 auf die Verbindungsstücke aufgeschoben und bis zu den Federelementen 115, 116 geschoben.

Hierauf folgend werden die vier Halteelemente 107-110 auf die Rundstange 105 aufgeschoben und danach die Rundstange 105 und die Arretierungsstange 106 in paralleler Lage zueinander zwischen die beiden Verbindungsstücke 103, 104 eingesetzt und die Lagerzapfen 113, 114 in die Arretierungsstange 106 eingeführt. Durch Drehen der Rundstange 105 kann diese Lage der Verbindungsstücke zu der Arretierungsstange zusammengeführt und -gefügt werden. Durch Verwendung eines hochfesten Schraubensicherungsmittels in der Verbindung zwischen der Rundstange 105 und den Verbindungsstücken 103, 104 kann die gesamte Flanschvorrichtung gegen mutwillige Demontage in einer einfacher Weise gesichert werden.

## Patentansprüche

1. Scharniervorrichtung für einen Deckel und/oder Sitz einer Toilette in einem bewegten Fahrzeug, mit einem Befestigungsflansch (101, 102) und mit einem Arretierungselement, und mit zumindest einem an dem Befestigungsflansch (101, 102) drehbar gelagerten Halteelement (107-110) zur Befestigung des Deckels oder des Sitzes, das einstückig mit einer als Vertiefung ausgebildeten Rastnut verbunden ist, die zur Arretierung des Deckels in einer angehobenen Position mit dem federnd nachgebenden Arretierungselement zusammenwirkt,
**dadurch gekennzeichnet, dass** das Arretierungselement als um ihre Längsachse drehbare und radial zur Drehachse der Halteelemente federnd nachgebende Arretierungsstange (106) ausgebildet ist und derart angeordnet ist, dass sie sich bei der Ein- und Ausrastung der Rastnut an der Stange zur Vermeidung einer Relativbewegung zwischen den Oberflächen des in Kontakt tretenden Arretierungselements und des Halteelements drehen kann.

2. Scharniervorrichtung nach Anspruch 1,
**dadurch gekennzeichnet, dass** für den Deckel zwei Halteelemente und/oder für den Sitz zwei Haltelemente bereitgestellt sind, die vorzugsweise um eine gemeinsame Achse drehbar gelagert sind und die weiter vorzugsweise mit einer einzigen Arretierungsstange zur Arretierung jedes Halteelementes zusammenwirken.

3. Scharniervorrichtung nach Anspruch 1 oder 2,
**dadurch gekennzeichnet, dass** das/die Halteelemente um eine Achse (105) drehbar gelagert ist/sind, die sich in Einbaulage horizontal erstreckt und die mittels eines Verbindungsstücks (103, 104) mit einer Flanschplatte zur Befestigung des Scharniers verbunden ist.

4. Scharniervorrichtung nach Anspruch 3,
**dadurch gekennzeichnet, dass** das Verbindungsstück (103, 104) und die Flanschplatte (101, 102) an einem einstückigen Gussteil ausgebildet sind.

5. Scharniervorrichtung nach einem der vorhergehenden Ansprüche,
**dadurch gekennzeichnet, dass** zwei Befestigungsflansche bereitgestellt sind, die jeweils ein Verbindungstück umfassen, wobei die Verbindungsstücke mittels einer in Einbaulage vorzugsweise oberen Rundstange (105) miteinander verbunden sind, an der das/die Halteelemente drehbar gelagert sind und an den Verbindungsstücken eine in Einbaulage vorzugsweise untere Arretierungsstange (106) drehbar und translatorisch entlang den Verbindungsstücken verschiebbar gelagert ist.

6. Scharniervorrichtung nach dem vorhergehenden Anspruch,
**dadurch gekennzeichnet, dass** die Rundstange und die Arretierungsstange parallel zueinander angeordnet sind.

7. Scharniervorrichtung nach einem der vorhergehenden Ansprüche 5-6,
**dadurch gekennzeichnet, dass** die Rundstange (105) an beiden Enden ein Gewinde aufweist, vorzugsweise ein Außengewinde, mittels dem sie in ein entsprechendes Gewinde an den Verbindungsstücken befestigt ist, wobei das Gewinde an der einen Seite der Rundstange als linksgängig und das Gewinde an der anderen Seite der Rundstange rechtsgängig ausgebildet ist.

8. Scharniervorrichtung nach einem der vorhergehenden Ansprüche 3-6,
**dadurch gekennzeichnet, dass** um das Verbindungsstück ein in axialer Richtung elastisches Ringelement (115, 116) angeordnet ist, welches sich zwischen Flanschplatte und Arretierungsstange erstreckt und dazu dient, die elastische Beweglichkeit der Arretierungsstange bereitzustellen.

9. Scharniervorrichtung nach dem vorhergehenden Anspruch,
**dadurch gekennzeichnet, dass** das elastische Ringelement (115, 116) ein Schlauchstück aus einem gummielastischen Kunststoff oder eine Schraubenfeder ist und dass vorzugsweise das/die Haltelemente, das Arretierungselement und/oder der/die Befestigungsflansche aus einem korrosionsbeständigen Material, vorzusgweise aus einem Edelstahl sind.

10. Scharniervorrichtung nach einem der vorhergehenden Ansprüche,
**dadurch gekennzeichnet, dass** die drehbare Lagerung der Halteelemente, die drehbare Lagerung der Arretierungsstange und die translatorische Bewegung der Arretierungsstange mittels Kunststoffbuchsen gelagert ist.

## Claims

1. Hinge device for a lid and/or seat of a toilet in a moved vehicle, comprising a fixing flange (101, 102) and a locking element and with at least one retaining element (107-110) rotatably mounted on the fixing flange (101, 102) to secure the lid or seat, which is integrally joined to a latching groove in the form of a recess which co-operates with the resiliently flexible locking element in order to lock the lid in a raised position,
**characterised in that** the locking element is provided in the form of a locking rod (106) rotatable about its longitudinal axis and resiliently flexible radially with respect to the axis of rotation of the retaining elements and disposed so that it is able to rotate as the latching groove latches on and off the rod in order to prevent a relative movement between the surfaces of the locking element and retaining element which come into contact.

2. Hinge device as claimed in claim 1,
**characterised in that** two retaining elements are provided for the lid and/or two retaining elements are provided for the seat, which are preferably mounted so as to be rotatable about a common axis and which also preferably co-operate with a single locking rod in order to lock each retaining element.

3. Hinge device as claimed in claim 1 or 2,
**characterised in that** the retaining element (s) is/are mounted so as to be rotatable about an axis (105) which extends horizontally in the fitted position and which provides a link to a flange plate by means of a connecting piece (103, 104) in order to secure the hinge.

4. Hinge device as claimed in claim 3,
**characterised in that** the connecting piece (103, 104) and the flange plate (101, 102) are formed on an integral cast part.

5. Hinge device as claimed in one of the preceding claims,
**characterised in that** two fixing flanges are provided, each of which has a connecting piece and the connecting pieces are connected to one another by means of what is preferably a top round rod in the fitted position, on which the retaining element (s) is or are rotatably mounted, and what is preferably a bottom locking rod (106) in the fitted position is mounted on the connecting pieces so as to be rotatable and displaceable in translation along the connecting pieces.

6. Hinge device as claimed in the preceding claim,
**characterised in that** the round rod and the locking rod are disposed parallel with one another.

7. Hinge device as claimed in one of preceding claims 5-6,
**characterised in that** the round rod (105) has a thread at both ends, preferably an external thread, by means of which it is secured in a co-operating thread on the connecting pieces, and the thread at one end of the round rod has a left-handed pitch and the thread at the other end of the round rod has a right-handed pitch.

8. Hinge device as claimed in one of preceding claims 3-6,
**characterised in that** an elastic ring element (115, 116) is disposed around the connecting piece in the axial direction, which extends between the flange plate and locking rod, the purpose of which is to enable the locking rod to be elastically displaced.

9. Hinge device as claimed in the preceding claim,
**characterised in that** the elastic ring element (115, 116) is a hose piece made from a rubber-elastic plastic or a helical spring and the retaining element(s), locking element and/or fixing flange (s) are made from a corrosion-resistant material, preferably a stainless steel.

10. Hinge device as claimed in one of the preceding claims,
**characterised in that** the rotatable bearing of the retaining elements, the rotatable bearing of the locking rod and the translating movement of the locking rod are achieved on the basis of plastic bushes.

## Revendications

1. Dispositif de charnière pour un couvercle et/ou un siège de toilettes dans un véhicule en déplacement, comprenant une bride de fixation (101, 102) et un élément de blocage, et comprenant au moins un élément de maintien (107-110) logé de manière à pouvoir tourner au niveau de la bride de fixation (101, 102) et servant à fixer le couvercle ou le siège, ledit élément de maintien étant relié d'un seul tenant à une rainure d'arrêt réalisée sous la forme d'un creux, laquelle coopère avec l'élément de blocage qui est élastiquement déformable aux fins du blocage du couvercle dans une position relevée,
**caractérisé en ce que** l'élément de blocage est réalisé sous la forme d'une tige de blocage (106) pouvant tourner autour de son axe longitudinal et se déformant de manière élastique radialement par rapport à l'axe de rotation des éléments de maintien et est disposé de telle manière que ledit dispositif de charnière peut se tourner lors de l'engagement ou du dégagement de la rainure d'arrêt au niveau de la tige afin d'éviter un mouvement relatif entre les surfaces de l'élément de blocage entrant en contact et l'élément de maintien.

2. Dispositif de charnière selon la revendication 1,
**caractérisé en ce que** deux éléments de maintien sont fournis pour le couvercle et/ou deux éléments de maintien sont fournis pour le siège, lesquels sont logés de manière à pouvoir tourner de préférence autour d'un axe commun et qui coopèrent en outre de préférence avec une tige de blocage unique servant à bloquer chaque élément de maintien.

3. Dispositif de charnière selon la revendication 1 ou 2,
**caractérisé en ce que** l'élément de maintien/les éléments de maintien est/sont logé(s) de manière à pouvoir tourner autour d'un axe (105), lequel axe s'étend de manière horizontale dans la position de montage et qui est relié, au moyen d'une pièce d'assemblage (103, 104), à une plaque de bride servant à fixer la charnière.

4. Dispositif de charnière selon la revendication 3,
**caractérisé en ce que** la pièce d'assemblage (103, 104) et la plaque de bride (101, 102) sont réalisées au niveau d'une pièce moulée d'un seul tenant.

5. Dispositif de charnière selon l'une quelconque des revendications précédentes,
**caractérisé en ce que** deux brides de fixation sont fournies, lesquelles comprennent respectivement une pièce d'assemblage, sachant que les pièces d'assemblage sont reliées entre elles au moyen d'une tige ronde de préférence supérieure dans la position de montage, au niveau de laquelle sont logés le ou les éléments de maintien de manière à pouvoir tourner, et sachant qu'est logée, au niveau des pièces d'assemblage, une tige de blocage (106) de préférence inférieure dans la position de montage de manière à pouvoir tourner et de manière à pouvoir être coulissée par translation le long des pièces d'assemblage.

6. Dispositif de charnière selon la revendication précédente,
**caractérisé en ce que** la tige ronde et la tige de blocage sont disposées de manière parallèle l'une par rapport à l'autre.

7. Dispositif de charnière selon l'une quelconque des revendications précédentes 5 et 6,
**caractérisé en ce que** la tige ronde (105) présente au niveau des deux extrémités un filetage, de préférence un filetage extérieur, au moyen duquel ladite tige ronde est fixée dans un filetage correspondant au niveau des pièces d'assemblage, sachant que le filetage au niveau d'un côté de la tige ronde est réalisé sous la forme d'un filetage à pas à gauche et que le filetage au niveau de l'autre côté de la tige ronde est réalisé sous la forme d'un filetage à pas à droite.

8. Dispositif de charnière selon l'une quelconque des revendications 3 à 6,
**caractérisé en ce qu'**un élément annulaire (115, 116) élastique dans une direction axiale est disposé autour de la pièce d'assemblage, lequel élément annulaire s'étend entre la plaque de bride et la tige de blocage et sert à fournir la mobilité élastique à la tige de blocage.

9. Dispositif de charnière selon la revendication précédente,
**caractérisé en ce que** l'élément annulaire (115, 116) élastique est un élément tubulaire flexible composé d'une matière plastique élastique ou est un ressort hélicoïdal, et **en ce que** de préférence l'élément ou les éléments de maintien, l'élément de blocage et/ou la ou les brides de fixation sont composés d'un matériau résistant à la corrosion, de préférence sont composés d'un acier inoxydable.

10. Dispositif de charnière selon l'une quelconque des revendications précédentes,
**caractérisé en ce que** le logement rotatif des éléments de maintien, le logement rotatif de la tige de blocage et le mouvement par translation de la tige de blocage sont effectués au moyen de manchons en plastique.
